# EUROPÄISCHE PATENTSCHRIFT

(11) **EP 1 830 048 B1**
(45) Veröffentlichungstag und Bekanntmachung des Hinweises auf die Patenterteilung: **26.10.2016**
(21) Anmeldenummer: 07001252.1
(22) Anmeldetag: 20.01.2007
(51) Int. Cl.: F02B 29/04, F28D 9/00

(54) **Wärmetauscher mit einer Anschlussplatte, insbesondere Ladeluftkühler**
Heat exchanger with a connecting plate, in particular intercooler
Echangeur thermique doté d'une plaque de raccordement, en particulier refroidisseur de l'air de suralimentation

(30) Priorität: 04.02.2006 DE 102006005106
(43) Veröffentlichungstag der Anmeldung: 05.09.2007
(73) Patentinhaber: Modine Manufacturing Company, Racine, Wisconsin 53403-2552 (US)
(72) Erfinder: Bazika, Denis, 73730 Esslingen (DE)
(74) Vertreter: Wolter, Klaus-Dietrich

(56) Entgegenhaltungen:
- DE-A1- 4 407 080
- FR-A- 2 855 604
- GB-A- 2 275 996
- US-A1- 2002 174 978

## Beschreibung

Die Erfindung betrifft einen Wärmetauscher mit einer Anschlussplatte, insbesondere einen Ladeluftkühler, der die weiteren Merkmale aus dem Oberbegriff des Anspruchs 1 aufweist. Solch ein Wärmeübertrager ist aus FR 2 855 604 bekannt.

Ein aus Wärmetauscherplatten aufgebauter Ladeluftkühler, der eine Anschlussplatte aufweist und in einem Gehäuse angeordnet ist, ist aus DE 43 07 503 A1 (GB 2 275 996A) bekannt, ohne dass dort weitere Befestigungsmerkmale des Ladeluftkühlers im Gehäuse (G) aufgezeigt wurden. Die Wärmetauscherplatten bilden dort die Kühlmittelkanäle und die Endkammern für das Kühlmittel aus. Dieser Wärmetauscher ist ziemlich aufwendig in der Herstellung, beispielsweise deshalb weil er Stützleisten (L) benötigt, die zwischen der oberen und unteren Abschlussplatte eingefügt werden. Die Gesamtkonstruktion wird dann in das Gehäuse (G) eingesetzt.
Der aus der FR 2 855 604 bekannte Wärmetauscher besitzt keine Anschlussplatte, mit der der Wärmetauscher im Gehäuse befestigt werden kann. Jedoch wurde dort bereits vorgesehen, zwischen den Endkammern des Wärmetauschers, ein u-förmiges Verschlussteil einzusetzen, um den Ladeluftstrom auf den Wärme tauschenden Bereich zu konzentrieren und demnach die Effizienz zu verbessern. Diese Effizienzverbesserung wird auch mit dem Wärmetauscher erreicht, der aus der DE 44 07 080A1 bekannt ist. Dort wurde kein Verschlussteil eingefügt, sondern das Gehäuse wurde entsprechend verformt, um den Luft-Bypass zu beseitigen. Eine Anschlussplatte ist bei diesem Wärmetauscher ebenfalls nicht vorhanden. Die Herstellung eines solchen Gehäuses ist aufwendig.
In der erst kürzlich eingereichten deutschen Patentanmeldung mit der Anmeldenummer DE10 2005 058 769.0 wurden anstelle der Wärmetauscherplatten Flachrohre als Kühlmittelkanäle eingesetzt. Die Endkammern wurden mittels einfacher Rohre dargestellt, in denen die Flachrohre einmünden.
Ein Nachteil des Gegenstandes der früheren Anmeldung wird darin gesehen, dass es der Ladeluft gestattet wird, auch durch den Bereich zu strömen, wo sich die Endkammern für das Kühlmittel befinden. Dort ist der Wärmetausch nicht besonders intensiv.

Die Aufgabe der Erfindung besteht darin, den Wärmetauscher mit den erwähnten Merkmalen derart weiterzubilden, dass die Befestigung des Wärmetauschers im Gehäuse verbessert bzw. vereinfacht wird.
Die erfindungsgemäße Lösung erfolgt mit den Merkmalen aus dem Kennzeichen des Anspruchs 1.
Im Inneren eines Kunststoff-Gehäuses ist zwischen zwei Endkammern wenigstens eine Leiste einteilig mit dem Gehäuse ausgebildet, die sich wenigstens über einen wesentlichen Teil der Endkammerlänge erstreckt, wobei das Gehäuse eine Montageöffnung aufweist, in die der Wärmetauscher einsetzbar und mit seiner Anschlussplatte zu befestigen ist.
Die Anschlussplatte überragt den Körper des Wärmetauschers. Sie weist Öffnungen auf, die mit Befestigungsöffnungen am Rand der Montageöffnung korrespondieren.
Dadurch wird erstens bewirkt, dass der Wärmetauscher kassettenartig ganz einfach von oben in das Gehäuse eingesetzt werden kann und damit befestigt ist. Ferner bewirken die Leisten, dass die beispielsweise Ladeluft nicht durch den Bereich strömen kann, in dem sich die Endkammern für das Kühlmittel befinden. In diesem Bereich ist der Wärmetausch nicht besonders intensiv, weil sich dort oft keine Rippen befinden. Die vorgeschlagene Lösung besitzt den weiteren Vorteil, dass sie deutlich größere Bautoleranzen zulässt.
Weitere Merkmale ergeben sich aus den Ansprüchen.
Die Erfindung wird anhand eines Ausführungsbeispiels, das in den beiliegenden Figuren abgebildet ist, erläutert. Weitere, möglicherweise auch wichtige Merkmale und Vorteile sind in der folgenden Beschreibung enthalten.

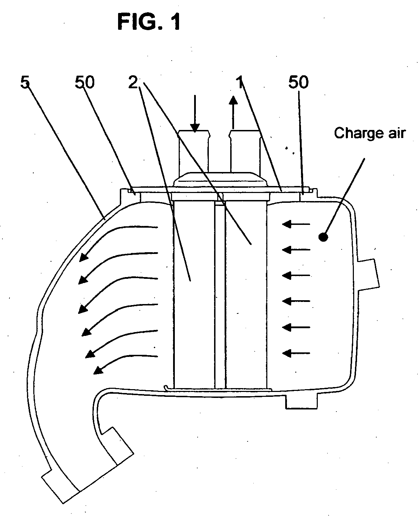

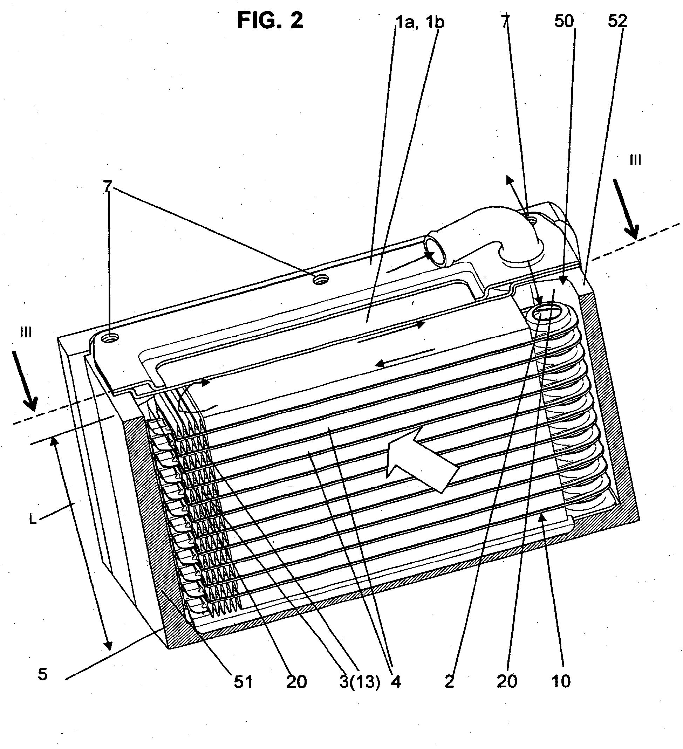

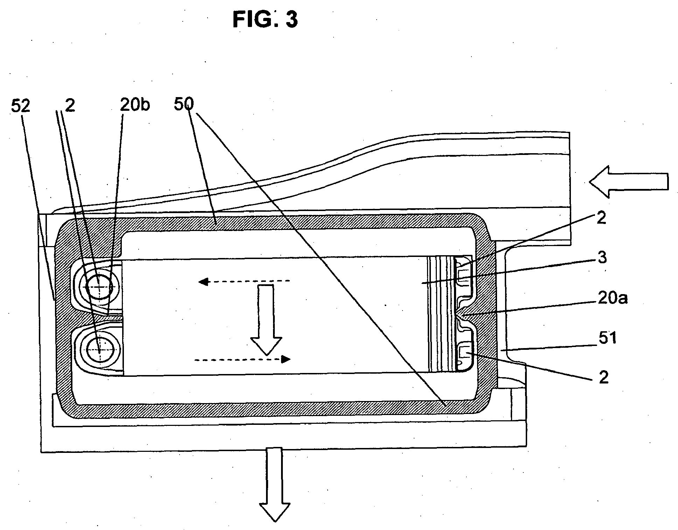

Die Fig. 1 zeigt den Wärmetauscher im Gehäuse gemäß der früheren Anmeldung. Die Fig. 2 und 3 zeigen den Wärmetauscher im Gehäuse gemäß der vorliegenden Erfindung in einer Ansicht bzw. in einem Schnitt.

Der Wärmetauscher im gezeigten Ausführungsbeispiel ist ein Ladeluftkühler mit dem die Ladeluft mittels Kühlflüssigkeit eines nicht gezeigten Kraftfahrzeugmotors gekühlt wird.
Der Ladeluftkühler weist eine zweiteilige Anschlussplatte **1** auf, die über den Körper **10** des Wärmetauschers übersteht. Das aus Kunststoff bestehende Gehäuse **5** weist eine Öffnung **50** auf. Am Rand dieser Öffnung **50** befinden sich Befestigungsöffnungen, die mit korrespondierenden Öffnungen 7 in der Anschlussplatte 1 eine erste Befestigung erlauben. Dazu wird auf die Fig. 1 verwiesen.
Der Körper 10 des Wärmetauschers, besteht im gezeigten Ausführungsbeispiel aus Wärmetauscherplatten und aus Rippen 13. Zwei Wärmetauscherplatten bilden zwischen sich jeweils einen Kühlmittelkanal 4. Zwischen zwei Paaren von Wärmetauscherplatten befindet sich jeweils ein Kanal 3 für die zu kühlende Ladeluft. In diesen Kanälen 3 sind Rippen 13 angeordnet worden. Durch die Formgebung der Wärmetauscherplatten wurden auch Endkammern 2 für das Kühlmittel ausgebildet.

Bei einem nicht gezeigten Ausführungsbeispiel sind Flachrohre und beabstandete Endkammern aus Rohren vorgesehen, wie es in der früheren Anmeldung mit der Nr. DE10 2005 058 769.0 gezeigt und beschrieben wurde. Auf diese Anmeldung wird ausdrücklich verwiesen. Ihr Inhalt soll als an dieser Stelle offenbart angesehen werden, denn dieser Vorschlag ist mit den gleichen Vorteilen dort anwendbar und auch dafür vorgesehen.

In den Fig. 2 und 3 wurden Pfeile eingezeichnet, die die Durchströmung auf der Kühlmittelseite und auf der Ladeluftseite (Blockpfeile) anzeigen. Wie daraus zu erkennen ist, strömt das Kühlmittel über einen Anschlussstutzen in der Anschlussplatte **1** in eine Endkammer **2** ein und auf einem Hinweg und einem parallelen Rückweg durch die Kühlmittelkanäle **4,** um den Wärmetauscher über eine andere Endkammer **2** zu verlassen. Der Hinweg und der Rückweg sind jeweils durch eine nicht gezeigte Flusstrennung voneinander getrennt. Zwischen dem Hinweg und dem Rückweg muss eine Strömungsverbindung am Ende der Flusstrennung bestehen, die nicht detailliert gezeigt ist, die allerdings auch zum Stand der Technik gehören kann. Diese Strömungsverbindung wird als Verbindung zwischen zwei weiteren nicht deutlich gezeigten Endkammern **2** angesehen, die an der gegenüberliegenden Seite des Wärmetauschers angeordnet sind. Die Endkammerlänge **L** wurde in der Fig. 2 angedeutet. Sie entspricht etwa der Höhe des Wärmetauschers.
Das Gehäuse **5** besitzt zwei Wände **51, 52** deren Abstand voneinander nicht wesentlich größer ist als die Länge des Wärmetauschers, was aus den Fig. 2 und 3 gut erkennbar ist. Die Fig. 3 zeigt einen Schnitt gemäß der Linie III - 111 aus der Fig. 2, also in einer durch die Öffnung **50** gehenden Ebene unterhalb der Anschlussplatte **1.** An diesen gegenüberliegenden Wänden **51** und **52** des Gehäuses **5** wurde jeweils einen Leiste **20** ausgebildet. Die Leisten **20** erstrecken sich vertikal zur Ebene der Öffnung **50,** also in Einsetzrichtung des Wärmetauschers, in das Gehäuse **5** hinein. Ihre Länge entspricht etwa der Länge der erwähnten Endkammern **2.** Zwischen den Endkammern **2** befindet sich ein gewisser Freiraum, so dass die Leiste **20** dort ohne weiteres hineinpasst. Im Ausführungsbeispiel wurde der Querschnitt der Leisten **20** etwas konisch bzw. in Richtung auf die Mitte des Gehäuses **5** dünner werdend ausgebildet und somit der Form des erwähnten Freiraumes angepasst. Demnach ist der Wärmetauscher allein durch das Einsetzen und durch die vorne beschriebene erste Befestigung des Öffnungsrandes **50** mit der Anschlussplatte **1** ausreichend und stabil befestigt. Die Leisten **20** sperren den Durchströmweg der Ladeluft im Bereich der Endkammern **2** im Wesentlichen ab und konzentrieren den Ladeluftstrom somit auf den hoch effizienten Bereich des Wärmetauschers, in dem sich die Rippen **13** befinden.

Der Wärmetauscher kann im Übrigen durchaus ein gewisses Spiel im Gehäuse **5** haben, weshalb dieser Vorschlag größere Toleranzen auf der Gehäuseseite und/oder auf der Wärmetauscherseite zulässt.

## Patentansprüche

1. Wärmetauscher mit einer Anschlussplatte (1), insbesondere Ladeluftkühler, der in einem Gehäuse (5) angeordnet ist, in das die Ladeluft einströmt, die der Ladeluft zugeordneten mit Rippen (13) versehenen Kanäle (3) des Ladeluftkühlers durchströmt und wieder ausströmt, wobei das Gehäuse (5) eine Montageöffnung (50) aufweist, in die der Wärmetauscher einsetzbar und mit seiner Anschlussplatte (1) zu befestigen ist, wobei der Körper (10) des Wärmetauschers im Inneren des Gehäuses (5) ebenfalls befestigt ist, und wobei der Ladeluftkühler Endkammern (2) für ein Kühlmittel aufweist, die mit Kühlmittelkanälen (4) in Verbindung stehen,
**dadurch gekennzeichnet, dass** im Inneren des Gehäuses (5) zwischen zwei Endkammern (2) wenigstens eine Leiste (20) ausgebildet ist, die sich wenigstens über einen wesentlichen Teil der Endkammerlänge (L) erstreckt.

2. Wärmetauscher nach Anspruch 1, **dadurch gekennzeichnet, dass** eine zweite Leiste (20) vorgesehen ist, die sich zwischen zwei anderen Endkammern (2) befindet, wobei die eine Leiste (20a) an einer Wand (51) des Gehäuses (5) und die zweite Leiste (20b) an der gegenüberliegenden Wand (52) des Gehäuses (5) angeordnet ist.

3. Wärmetauscher nach Anspruch 1, **dadurch gekennzeichnet, dass** sich die Leisten (20) in Einsetzrichtung des Wärmetauschers erstrecken.

4. Wärmetauscher nach Anspruch 1, **dadurch gekennzeichnet, dass** sich die Leisten (20) so weit in einen Freiraum zwischen zwei Endkammern (2) hinein erstrecken, dass ein nicht intensiv am Wärmeaustausch beteiligter Bereich des Wärmetauschers im Wesentlichen nicht von der beispielsweise Ladeluft durchströmbar ist.

5. Wärmetauscher nach einem der vorstehenden Ansprüche, **dadurch gekennzeichnet, dass** die Leisten (20) eine konische Querschnittsform aufweisen können.

## Claims

1. Heat exchanger having an attachment plate (1), in particular charge-air cooler, which is arranged in a housing (5) into which the charge air flows, which charge air flows through ducts (3), which are assigned to the charge air and equipped with ribs (13), of the charge-air cooler and flows out again, wherein the housing (5) has an installation opening (50) into which the heat exchanger is insertable and is to be fastened by way of its attachment plate (1), wherein the body (10) of the heat exchanger is fastened in the interior of the housing (5), and wherein the charge-air cooler has end chambers (2) for a coolant, which end chambers are connected to coolant ducts (4), **characterized in that**, in the interior of housing (5), between two end chambers (2), at least one strip (20) is formed, which at least one strip extends at least over a major part of the end chamber length (L).

2. Heat exchanger according to Claim 1, **characterized in that** a second strip (20) is provided which is situated between two other end chambers (2), wherein one strip (20a) is arranged on one wall (51) of the housing (5), and the second strip (20b) is arranged on the opposite wall (52) of the housing (5).

3. Heat exchanger according to Claim 1, **characterized in that** the strips (20) extend in the insertion direction of the heat exchanger.

4. Heat exchanger according to Claim 1, **characterized in that** the strips (20) extend into a free space between two end chambers (2) to such an extent that a region of the heat exchanger which is not intensively involved in the exchange of heat substantially cannot be flowed through by the, for example, charge air.

5. Heat exchanger according to one of the preceding claims, **characterized in that** the strips (20) may have a conical cross-sectional shape.

## Revendications

1. Échangeur thermique comprenant une plaque de raccordement (1), en particulier refroidisseur d'air de suralimentation, qui est disposé dans un boîtier (5) dans lequel s'écoule l'air de suralimentation qui traverse des canaux (3) du refroidisseur d'air de suralimentation pourvus d'ailettes (13), associés à l'air de suralimentation, et qui ressort à nouveau de ceux-ci, le boîtier (5) présentant une ouverture de montage (50) dans laquelle l'échangeur thermique peut être inséré et doit être fixé avec ses plaques de raccordement (1), le corps (10) de l'échangeur thermique étant fixé à l'intérieur du boîtier (5) et le refroidisseur d'air de suralimentation présentant des chambres d'extrémité (2) pour un réfrigérant qui sont en liaison avec des canaux de réfrigérant (4), **caractérisé en ce qu'**à l'intérieur du boîtier (5) entre deux chambres d'extrémité (2) est réalisée au moins une nervure (20), laquelle s'étend au moins sur une majeure partie de la longueur des chambres d'extrémité (L).

2. Échangeur thermique selon la revendication 1, **caractérisé en ce qu'**une deuxième nervure (20) est prévue, laquelle se trouve entre deux autres chambres d'extrémité (2), l'une des nervures (20a) étant disposée sur une paroi (51) du boîtier (5) et la deuxième nervure (20b) étant disposée sur la paroi opposée (52) du boîtier (5).

3. Échangeur thermique selon la revendication 1, **caractérisé en ce que** les nervures (20) s'étendent dans la direction d'insertion de l'échangeur thermique.

4. Échangeur thermique selon la revendication 1, **caractérisé en ce que** les nervures (20) s'étendent dans un espace libre entre deux chambres d'extrémité (2) dans une mesure telle qu'une région de l'échangeur thermique ne participant pas intensément à l'échange thermique puisse ne pas être sensiblement parcourue par exemple par l'air de suralimentation.

5. Échangeur thermique selon l'une quelconque des revendications précédentes, **caractérisé en ce que** les nervures (20) peuvent présenter une forme conique en section transversale.
